# EUROPÄISCHE PATENTSCHRIFT

(11) **EP 2 253 902 B1**
(45) Veröffentlichungstag und Bekanntmachung des Hinweises auf die Patenterteilung: **07.10.2015**
(21) Anmeldenummer: 10004614.3
(22) Anmeldetag: 03.05.2010
(51) Int. Cl.: F24J 2/52, H01L 31/048

(54) **Bauteilesatz für die Montage von Solarmodulen auf einem Dach**
Component set for fitting solar modules on a roof
Ensemble de composants pour le montage de modules solaires sur un toit

(30) Priorität: 20.05.2009 DE 202009007516 U
(43) Veröffentlichungstag der Anmeldung: 24.11.2010
(73) Patentinhaber: TriEnergy GmbH, 71287 Weissach (DE)
(72) Erfinder: Hertter, Bernd, 75389 Neuweiler (DE); Michler, Tobias, 71397 Leutenbach (DE); Krämer, Thomas, 71287 Weissach (DE)
(74) Vertreter: Twelmeier Mommer & Partner

(56) Entgegenhaltungen:
- FR-E- 81 850
- JP-A- 2003 035 016

## Beschreibung

Die Erfindung betrifft einen Bauteilesatz mit den im Oberbegriff des Anspruchs 1 angegebenen Merkmalen. Ein solcher Bauteilesatz ist bekannt. Er hat Quertraversen, welche waagerecht verlaufen und mit Abstand parallel zueinander auf einem Dach montiert werden. In je zwei benachbarte Quertraversen werden die rechteckigen Solarmodule so eingelegt, dass die Quertraverse die Solarmodule an deren unteren Rand und an deren oberen Rand umfassen. Um die Quertraversen auf einem Dach zu befestigen, werden sie mit geneigt verlaufenden Traversen verbunden, welche die Quertraversen unter einem rechten Winkel kreuzen. Bei einem geneigten Dach werden die geneigten Traversen zweckmäßigerweise mit derselben Neigung, die auch das Dach hat, angeordnet und an den vorhandenen Dachsparren befestigt. Auf Flachdächern können die geneigten Traversen Bestandteil von pultartigen Ständern sein, welche durch die Quertraversen verbunden werden.

Um die Quertraversen mit den geneigten Traversen zu verbinden, ist es bekannt, auf den geneigten Traversen Halter zu befestigen, in welche die Quertraversen von Hand eingeklippst werden. Zu diesem Zweck müssen die Halter und die Quertraversen in ihrer Gestalt und in ihren Abmessungen aufeinander abgestimmt sein. In dem bekannten Bauteilesatz haben die Halterungen eine zweiarmige Butterfly-Feder, welche mit der Quertraverse niedergedrückt werden muss, um die Quertraverse in die Halter einklippsen zu können. Danach stellt sich die Butterfly-Feder wieder zurück und verriegelt die Quertraverse in der Halterung.

Die Butterfly-Feder kann beim Montieren der Solarmodule durch Querkräfte plastisch verformt werden. Wenn der Fall eintritt, ist die Halterung nicht mehr zu gebrauchen. Wenn eine Quertraverse von den geneigten Traversen wieder gelöst werden soll, muss man die Butterfly-Feder an ihren beiden Flügeln zugleich niederdrücken und in niedergedrücktem Zustand die Quertraverse aus der Halterung herausheben. Das ist einem Handwerker allein nicht möglich. Er braucht dazu die Unterstützung eines zweiten Handwerkers.

Der vorliegenden Erfindung liegt die Aufgabe zugrunde, den Bauteilesatz zu verbessern, so dass die Solarmodule leichter montiert und demontiert werden können. Durch die Verbesserung soll der Bauteilesatz jedoch nicht teuerer werden.

Diese Aufgabe wird gelöst durch einen Bauteilesatz mit den im Anspruch 1 angegebenen Merkmalen. Vorteilhafte Weiterbildungen der Erfindung sind Gegenstand der Unteransprüche.

Im erfindungsgemäßen Bauteilesatz sind die Halter für die Quertraversen verbessert worden. Die Halter des erfindungsgemäßen Bauteilesatzes haben wie bisher als Grundkörper eine Platte, auf welcher zwei zueinander parallele Rippen vorgesehen sind. Die beiden Rippen sind zur Bildung einer Rille hinterschnitten ausgebildet. Die Hinterschnitte der beiden Rippen sind gleich orientiert, sie verlaufen nicht nur parallel zueinander sondern sind auch zur gleichen Seite hin offen. Neben den Rippen, aber nicht zwischen den Rippen, ist in der Platte eine Nut vorgesehen, welche parallel zu den Rippen verläuft. Diese Nut ist beidseitig hinterschnitten ausgebildet. In diese Nut ist eine Feder eingeschoben, welche durch die Hinterschnitte in der Nut gehalten ist und über die äußeren Ränder der Nut vorsteht. Erfindungsgemäß hat die Feder einen mittleren Abschnitt mit der Gestalt eines Brückenbogens, welcher über die äußeren Ränder der Nut herausragt. Der brückenbogenförmige Abschnitt ist also nicht breiter als die Öffnungsweite der Nut. An den brückenbogenförmigen Abschnitt der Feder schließen sich zwei breitere, ebene Endabschnitte der Feder an, mit welchen die Feder in der hinterschnittenen Nut gehalten wird. Vorzugsweise hat der brückenbogenförmige Abschnitt nur wenig Spiel zwischen den beiden Längsrändern der Nut. Die ebenen Endabschnitte der Feder sind jedoch breiter als die Öffnungsweite der Nut, so dass die Endabschnitte in die Hinterschnitte der Nut eingreifen. In Richtung quer zur Längsrichtung der Nut haben die ebenen Endabschnitte der Feder vorzugsweise nur wenig Spielraum. In Längsrichtung der Nut haben die Endabschnitte der Feder jedoch so viel Spielraum, dass sie in der Nut in deren Längsrichtung gleiten können, ohne anzustoßen, wenn der brückenbogenförmige Abschnitte der Feder niedergedrückt und dadurch die Wölbung der Feder verringert wird.

Ein solcher Halter hat gegenüber dem bekannten Halter wesentliche Vorteile:
- Die Feder ist bei gleicher Dicke des Federblechs stabiler als eine Butterfly-Feder.
- In dem neuen Halter ist die brückenbogenartige Feder gegen Querverformungen weniger empfindlich als eine Butterfly-Feder. Während die Butterfly-Feder zwei frei aus der Nut herausragende Flügel hat, hat der mittlere brückenbogenartige Abschnitt der Feder in dem Halter des erfindungsgemäßen Bauteilesatzes keine freien Enden, sondern Enden, die in den Hinterschnitten der Nut gefangen sind.
- In dem Halter des erfindungsgemäßen Bauteilesatzes kann die Feder durch Druck auf die Mitte des Bogens niedergedrückt weraen. Im Gegensatz dazu muss die Butterfly-Feder an ihren beiden in entgegengesetzte Richtungen weisenden Flügeln gleichzeitig niedergedrückt werden, um eine Quertraverse zu entriegeln, die durch die Feder im Halter verriegelt ist.
- Während sich bei dem bekannten Halter die Enden der Flügel der Butterfly-Federn dazu neigen, sich in die Unterseite der Quertraverse einzugraben, was das Einklippsen und das Entnehmen der Quertraverse aus dem Halter erschwert, besteht diese Gefahr bei dem Halter des erfindungsgemäßen Bauteilesatzes nicht, weil die Quertraverse mit ihrer Unterseite auf der Wölbung der Feder leichter gleiten kann.
- Die neue Halterung verteuert den Bauteilesatz nicht.

Vorzugsweise sind die Hinterschnitte der Nut, in welcher die Feder gehalten ist, an den Enden der Nut durch Prägen verengt. Dadurch ist sichergestellt, dass die Feder nicht aus der Nut herausgleitet. Die Länge der Nut bzw. der Abstand der durch Prägen gebildeten Engstellen an den Enden der Nut und die Länge der Feder sind zweckmäßigerweise so aufeinander abgestimmt, dass die Feder genügend Spielraum hat, um den gewölbten mittleren Abschnitt der Feder bis unter den oberen Rand der Nut drücken zu können.

Vorzugsweise sind an den Enden der Nut vier durch Prägen gebildete Engstellen vorgesehen, nämlich an beiden Enden der Nut an jedem der beiden Hinterschnitte.

Die Hinterschnitte der Rippen des Halters sind vorzugsweise Rillen und so orientiert, dass sie in Richtung zur Feder offen sind. Das ist die einfachste und bequemste Möglichkeit, die Quertraverse zu halten. Es ist aber auch möglich, komplizierter Querschnitte für die Hinterschnitte der Rippen des Halters zu verwirklichen.

Als Mittel zum Verbinden des Halters mit einer geneigten Traverse genügt eine mittige zylindrische Bohrung in der Platte des Halters, so dass der Halter mit der geneigten Traverse verschraubt werden kann. Zusätzlich können aus dem Boden der Nut zwei Zungen ausgeschnitten und nach unten abgebogen sein. Mit diesen Zungen kann der Halter auf die geneigte Traverse zentriert werden. Die Zungen können z. B. in eine Nut eingreifen, welche in der Oberseite der geneigten Traverse vorgesehen ist, oder sie können außen an den beiden Längsseiten der geneigten Traverse anliegen.

Der Halter (mit Ausnahme der Feder), die Quertraverse und die geneigte Traverse können Strangpressprofile sein, insbesondere aus Aluminium oder aus einer Aluminiumlegierung. Das erlaubt eine kostengünstige Herstellung.

Ausführungsbeispiele der Erfindung sind in den beigefügten Zeichnungen dargestellt. Gleiche oder einander entsprechende Teile sind in den Beispielen mit übereinstimmenden Bezugszahlen bezeichnet.
- Figur 1: zeigt einen Ständer, um gerahmte Solarmodule auf einem Flachdach oder an einer Fassade geneigt zu montieren, in einer Schrägansicht,
- Figur 2: zeigt in einer Schrägansicht eine Halterung aus zwei verschwenkbar miteinander verbundenen Winkelstücken für das Festlegen einer geneigten Traverse in dem in Figur 1 dargestellten Ständer,
- Figur 3: zeigt in einer Schrägansicht, in Explosionsdarstellung, wie an der geneigten Traverse des Ständers aus Figur 1 eine waagerecht verlaufende Quertraverse montiert wird,
- Figur 4: zeigt in einer Schrägansicht die längsgeschnittene geneigte Traverse des Ständers aus Figur 1, an welchem ein quer geschnitten dargestellter Halter festgeschraubt ist, in welchen die Quertraverse eingeklippst ist,
- Figur 5: zeigt den Halter aus Figur 4 vergrößert in einer Schrägansicht,
- Figur 6: zeigt den Halter aus Figur 5 in einer Schrägansicht, ergänzt um einen Gegenhalter, mit welchem er verschraubt ist,
- Figur 7: zeigt ein anderes Ausführungsbeispiel einer Halterung, welche aus zwei verschwenkbar miteinander verbundenen Winkelstücken gebildet ist, in einer Schrägansicht,
- Figur 8: zeigt das erste Winkelstück (Unterteil) der Halterung aus Figur 7 in einer Seitenansicht,
- Figur 9: zeigt das Unterteil aus Figur 7 in einer Ansicht parallel zu den Seitenteilen und zur Basis des Unterteils,
- Figur 10: zeigt das Unterteil aus Figur 7 in einer Draufsicht,
- Figur 11: zeigt eine Abwicklung des Unterteils,
- Figur 12: zeigt das zweite Winkelstück (Oberteil) der Halterung aus Figur 7 in einer Ansicht auf ein Seitenteil,
- Figur 13: zeigt das Oberteil aus Figur 7 in einer Ansicht parallel zu dessen Seitenteilen und dem Mittelteil,
- Figur 14: zeigt das Oberteil aus Figur 7 in einer Draufsicht, und
- Figur 15: zeigt eine Abwicklung des Oberteils aus Figur 7.

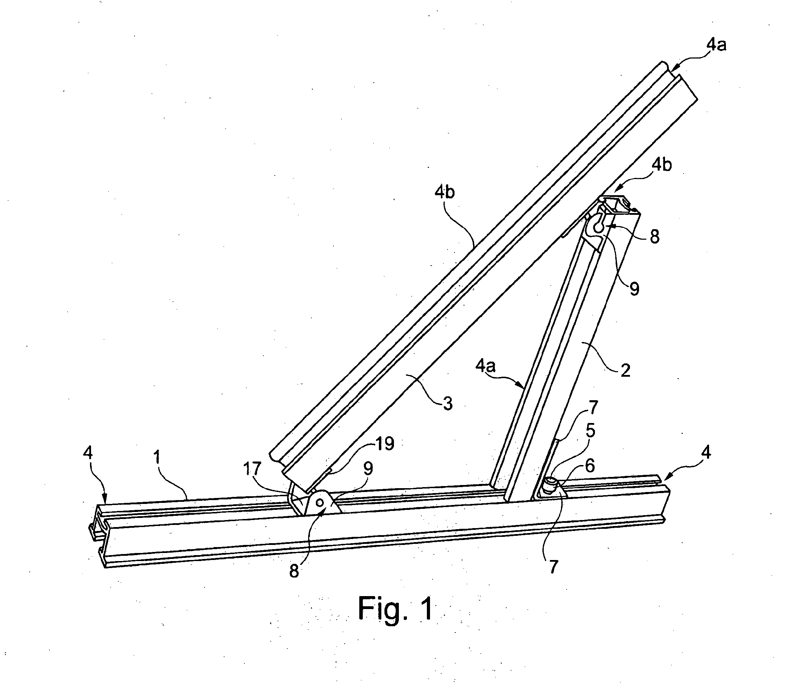

Der in Figur 1 dargestellte Ständer hat als waagerechten Träger eine Grundschiene 1, einen senkrecht auf der Grundschiene 1 stehenden Pfosten 2, der als Profilstab ausgebildet und mit der Grundschiene 1 verschraubt ist, sowie eine geneigte Traverse 3, welche sowohl mit der Grundschiene 1 als auch mit dem Pfosten 2 verbunden ist. Die Grundschiene 1, der Pfosten 2 und die geneigte Traverse 3 bestehen aus Metall, insbesondere aus Aluminium, und können durch Strangpressen hergestellt sein. Der Pfosten 2 und die geneigte Traverse 3 können dasselbe Querschnittsprofil aufweisen und so ist es im dargestellten Beispiel. Mit seiner Grundschiene 1 wird der Ständer auf einem Flachdach befestigt. Sowohl die Grundschiene 1 als auch der Pfosten 2 und die geneigte Traverse 3 haben eine hinterschnitten ausgebildete Nut 4, in welche der Kopf einer Schraube 5 unverlierbar eingeführt werden kann, deren Schaft aus der Nut 4 nach außen ragt. Vorzugsweise hat der Schaft der Schraube 5 unmittelbar angrenzend an ihren Kopf einen Abschnitt ohne Gewinde mit einem unrunden Querschnitt, insbesondere mit einem quadratischen oder sechseckigen Querschnitt, so dass sich die Schraube 5 in der hinterschnittenen Nut 4 nicht drehen kann, wenn auf das Gewinde der Schraube 5 eine Mutter 6 insbesondere eine Gleitmutter, gedreht wird. Solche Schrauben werden auch als Flachrundschrauben bezeichnet. Die Grundschiene 1 und der senkrecht darauf stehende Pfosten 2 sind mit Hilfe eines rechtwinkligen Montagewinkels 7 miteinander verschraubt, indem eine erste Schraube 5 mit ihrem Kopf in die hinterschnittene Nut 4 der Grundschiene 1 eingeführt, durch eine Bohrung des Montagewinkels 7 gesteckt und dann auf die beschriebene Weise mit einer Mutter 6 mit der Grundschiene 1 verschraubt wird. In entsprechender Weise ist der zweite Schenkel des Montagewinkels 7 mit dem Pfosten 2 verschraubt, wozu eine Schraube mit ihrem Kopf unverdrehbar in die hinterschnittene Nut 4 des Pfostens 2 eingeführt und verschraubt wird.

Die geneigte Traverse 3 ist mittels zweier in sich beweglicher Halterungen 8 einerseits an der Grundschiene 1 und andererseits am Pfosten 2 befestigt.

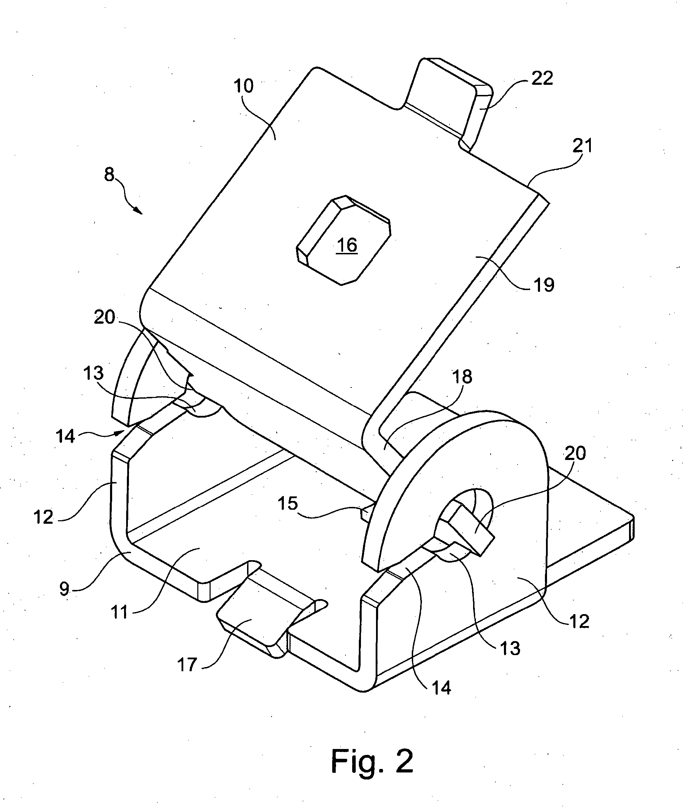

Figur 2 zeigt eine solche bewegliche Halterung 8 in einer Schrägansicht. Sie besteht aus einem ersten Winkelstück 9 als Unterteil und einem zweiten Winkelstück 10 als Oberteil. Das Unterteil 9 und das Oberteil 10 sind verschwenkbar miteinander verbunden.

Das erste Winkelstück 9 ist U-förmig ausgebildet. Es hat eine rechteckige Basis 11 und zwei deckungsgleich ausgebildete Seitenteile 12, welche rechtwinklig von der Basis 11 hoch stehen. Jedes Seitenteil 12 hat eine Bohrung 13 und einen Schlitz 14, welcher vom Rand des Seitenteils 12 ausgeht und in die Bohrung 13 mündet. Der Schlitz 14 hat ausgehend von der Bohrung 13 ein Gefälle zur Basis 11 hin. Ungefähr in der Mitte der Basis 11 befindet sich ein Loch 15 von quadratischem Querschnitt, wobei die Ecken des Quadrates abgeschrägt sind, so wie es in Figur 2 im zweiten Winkelstück 10 vorgesehen ist, welches ein gleich ausgebildetes Loch 16 aufweist. Weiterhin ist aus der Basis 11 in der Mitte zwischen den Seitenteilen 12 eine Zunge 17 ausgeschnitten und aus der Ebene der Basis 11 weggebogen, und zwar in Richtung zur Unterseite der Basis 11, das ist die den Seitenteilen 12 abgewandten Seite der Basis 11.

Das zweite Winkelstück 10 ist im Wesentlichen L-förmig ausgebildet, mit einem ersten Schenkel 18 und einem zweiten Schenkel 19, welche einen rechten Winkel zwischen sich einschließen. Die beiden Schenkel 18 und 19 sind so breit, dass sie genau oder mit wenig Spiel zwischen die beiden Seitenteile 12 des ersten Winkelstückes 9 passen. Der erste Schenkel 18 setzt sich in zwei seitliche Arme 20 fort, welche sich in entgegensetzte Richtungen erstrecken. Mit diesen Armen 20 ist das zweite Winkelstück 10 in den Bohrungen 13 der Seitenteile 12 schwenkbar gelagert. Durch die Schlitze 14 können die Arme 20 in die Bohrungen 13 eingeführt werden, in welchen sie nur wenig radiales Spiel haben.

Das Loch 16 mit quadratischem Querschnitt befindet sich in der Mitte des zweiten Schenkels 19. In der Mitte des von den Armen 20 entfernten Randes 21 des zweiten Schenkels 19 befindet sich eine Zunge 22, welche aus der Ebene des zweiten Schenkels 19 herausgebogen ist, und zwar in einer Richtung vom ersten Winkelstück 9 weg.

Bei den in Figur 1 dargestellten Ständern ist ein erstes Unterteil 9 am oberen Ende des Pfostens 2 befestigt, und zwar so, dass die Basis 11 der der Nut 4 abgewandten Seite des Pfostens 2 anliegt. Die Befestigung des Unterteils 9 am Pfosten 2 geschieht vorzugsweise durch Verschraubung mit einer Flachrundschraube und einer Gleitmutter.

Da der Pfosten 2 auf seiner der Nut 4 abgewandten Seite ebenfalls eine - allerdings tiefere - Nut 4a hat, welche beidseits hinterschnitten ist, kann das erste Winkelstück 9 mit dem Pfosten 2 auch verschraubt werden, wenn man in die Nut 4a einen Gegenhalter einführt, welcher mittig eine Gewindebohrung hat und sich an den Hinterschnitten 4b der Nut 4a abstützt. In diese Gewindebohrung kann eine Schraube gedreht werden, deren Kopf auf der Basis 11 des ersten Winkelstücks 9 liegt; dessen Loch 15 ist in diesem Fall zweckmäßig eine zylindrische Bohrung.

Ein zweites Unterteil 9 wird mit der Oberseite der Grundschiene 1 verschraubt, indem eine Schraube, welche zwischen ihrem Kopf und ihrem Gewindeabschnitt einen im Querschnitt quadratischen Schaft hat, mit dem Kopf in die hinterschnittene Nut 4 der Grundschiene 1 geschoben wird. Auf den quadratischen Schaft der Schraube wird das Unterteil 9 mit seinem quadratischen Loch 15 gesteckt, so dass das Unterteil 9 mittels des quadratischen Schaftes der Schraube relativ zur Grundschiene 1 so ausgerichtet wird, dass die Seitenteile 12 sich parallel zur Längsrichtung der Grundschiene 1 erstrecken, wie es in Figur 1 dargestellt ist. Mittels einer in Figur 1 nicht dargestellten Mutter wird das Unterteil 9, das ist das erste Winkelstück der Halterung 8, auf der Grundschiene 1 fixiert.

Zwei Oberteile 10, das sind die zweiten Winkelstücke der Halterungen 8, werden mit der Unterseite der geneigten Traverse 3 verbunden. Die Unterseite der geneigten Traverse 3 ist in Figur 1 nicht zu sehen; sie hat, ebenso wie der Pfosten 2, an ihrer Unterseite eine hinterschnittene Nut 4, in welche zwei Schrauben, welche zwischen ihrem Kopf und ihrem Gewinde einen im Querschnitt quadratischen Schaftabschnitt haben, mit ihrem Kopf hineingeschoben werden. Es handelt sich um Schrauben der Art, mit denen auch der Montagewinkel 7 an der Grundschiene 1 befestigt ist. Auf die Schrauben werden die Oberteile 10 der Halterungen 8 gesteckt und durch die quadratische Kontur des Loches 16, in welches der im Querschnitt quadratische Schaftabschnitt der Schrauben formschlüssig eingreift, parallel zur Längsrichtung der geneigten Traverse 3 ausgerichtet und anschließend mit dieser verschraubt. Dabei greifen die Oberteile 10 mit ihrer Zunge 22 in die hinterschnittene Nut 4 der geneigten Traverse 3 ein, wodurch ebenfalls eine Zentrierung und Ausrichtung erfolgen. In gleicher Weise greift die Zunge 17 des auf der Grundschiene 1 befestigten Unterteils 9 der Halterung 8 in die hinterschnittene Nut 4 der Grundschiene 1 ein und bewirkt dort eine Zentrierung und Ausrichtung.

Durch die Beweglichkeit der Oberteile 10 in den Unterteilen 9 kann die geneigte Traverse 3 biegespannungsfrei exakt in der gewünschten Neigung angeordnet werden, indem das an der Grundschiene 1 angebrachte Unterteil 9 durch hin und her Verschieben auf der Grundschiene 1 passend positioniert und schließlich durch Festschrauben fixiert wird.

Der in Figur 1 dargestellte Ständer kann abgewandelt und vereinfacht werden, indem in der Halterung 8, welche den Pfosten 2 mit der geneigten Traverse 3 verbindet, das Unterteil 9 und das Oberteil 10 unter dem gewünschten Neigungswinkel starr miteinander verbunden werden oder indem am oberen Ende des Pfostens 2 lediglich ein starres Winkelstück angeschraubt oder angeschweißt wird, welches in seinem vom Pfosten 2 fortweisenden Schenkel ein Loch mit quadratischer Kontur hat, wie das Loch 16 im Oberteil 10 gemäß Figur 2. Mit einem solchen starren Winkelstück kann die geneigte Traverse 3 mit vorgegebener Neigung am Pfosten 2 angebracht werden. Für die Befestigung der geneigten Traverse 3 frei von Biegespannung an der Grundschiene 1 genügt es, dass die Halterung 8 auf der Grundschiene 1 in deren Längsrichtung justiert werden kann, wobei sich die Neigung des Oberteils 10 selbsttätig der vorgegebenen Neigung der geneigten Traverse 3 anpasst.

Um rechteckige Solarmodule geneigt auf einem Flachdach anzuordnen, werden auf dem Flachdach zwei oder mehr als zwei Ständer der in Figur 1 dargestellten Art parallel nebeneinander angeordnet und durch zwei oder mehr als zwei waagerechte Quertraversen 23 miteinander verbunden.

Der in Figur 1 dargestellte Ständer eignet sich nicht nur zur Montage von Solarmodulen auf einem Flachdach, sondern auch zur Montage von Solarmodulen an einer Fassade. In diesem Fall wird die Grundschiene 1 nicht auf dem flachen Dach, sondern an der Fassade befestigt. Die Figur 1 ist dafür lediglich um 90° im Uhrzeigersinn zu drehen. Die Quertraversen 23 verlaufen in beiden Fällen waagerecht.

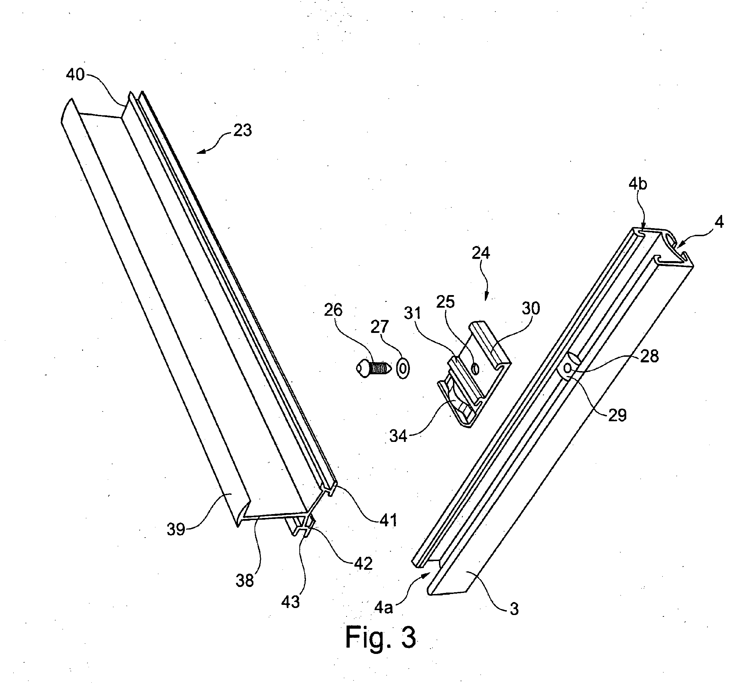

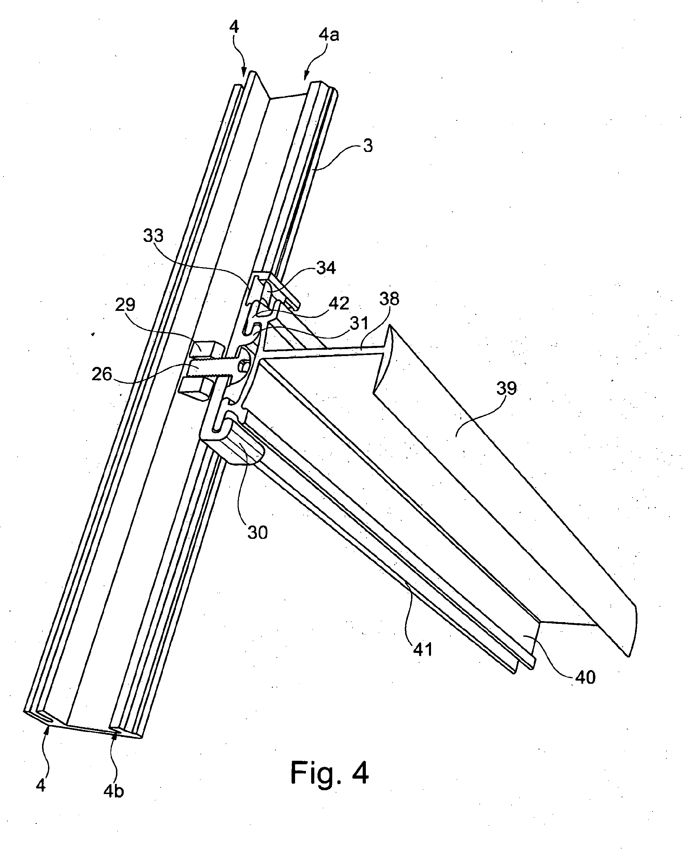

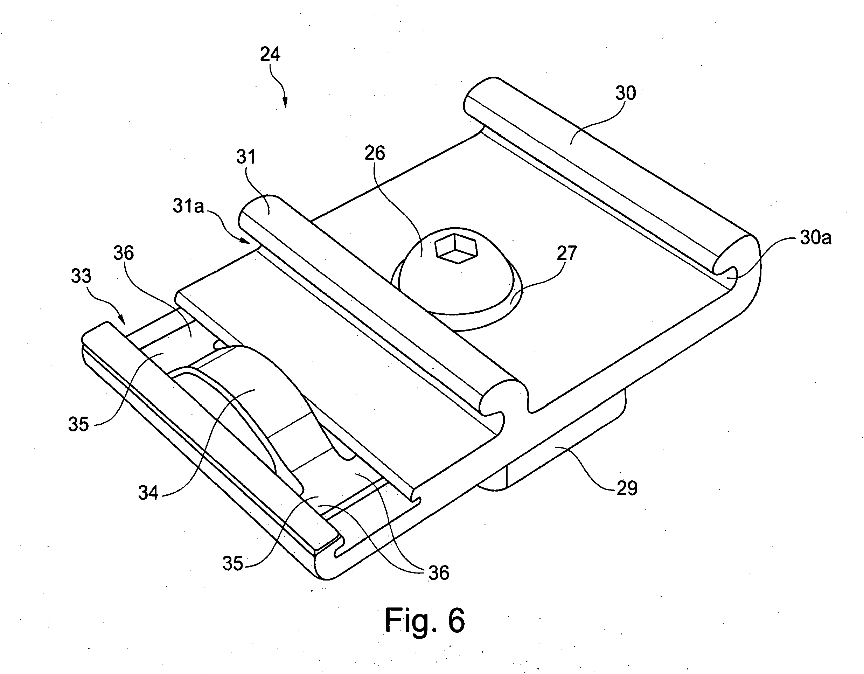

Die Figuren 3 und 4 zeigen, wie eine solche Quertraverse 23 mit einer geneigten Traverse 3 bequem verbunden werden kann. Zu diesem Zweck wird mit jeder geneigten Traverse 3 ein Halter 24 verschraubt, bei welchem es sich bevorzugt um einen Abschnitt eines metallischen Strangpressprofils handelt, welcher mittig eine zylindrische Bohrung 25 aufweist, durch welches eine Schraube 26 hindurch gesteckt werden kann, auf welche zuvor eine Unterlegscheibe 27 geschoben wurde. Die Schraube 26 wird in eine Gewindebohrung 28 eines Gegenhalters 29 gedreht, welcher in die hinterschnitten ausgebildete Nut 4a auf der Oberseite der geneigten Traverse 3 geschoben ist. Der Gegenhalter 29 ist so breit, dass er sich in der Traverse 3 nicht mitdrehen kann, wenn die Schraube 26 in ihn gedreht wird; er stützt sich an der Unterseite der Hinterschnitte 4b ab und verhindert ein Mitdrehen beim Schrauben durch formschlüssiges Eingreifen in die Nut 4a. Am Besten geht man so vor, dass man - wie in Figur 6 dargestellt - den Gegenhalter 29 zunächst locker mit dem Halter 24 verschraubt, den Gegenhalter 29 dann in die hinterschnitten ausgebildete Nut 4a der geneigten Traverse 3 schiebt und an der gewünschten Stelle durch Festdrehen der Schraube 26 fixiert.

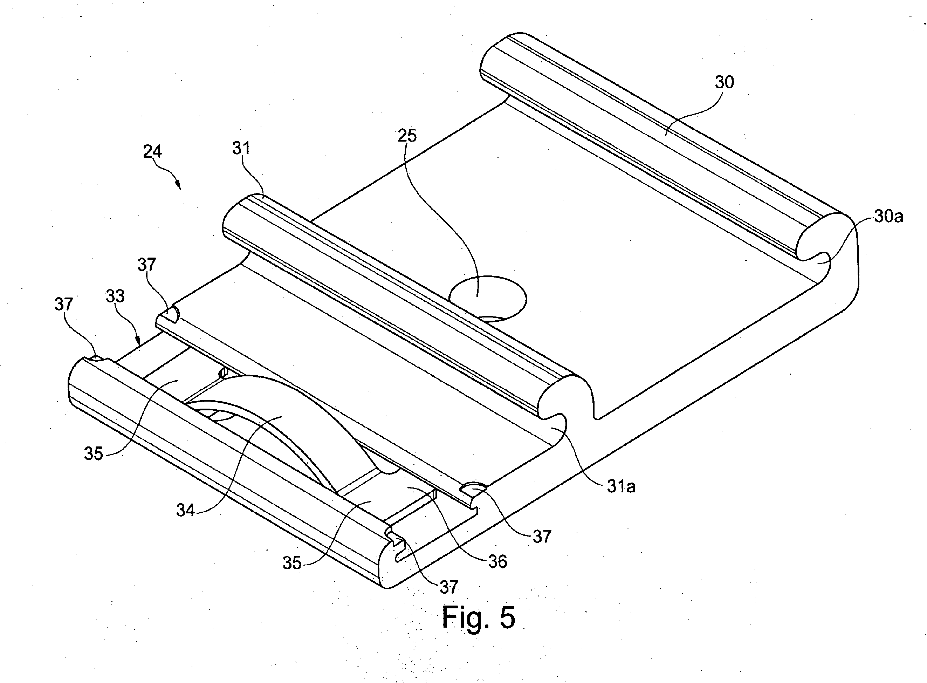

Wie man besonders gut anhand der Figur 6 sieht, hat der Halter 24 eine erste hinterschnittene Rippe 30 und parallel zu dieser eine zweite hinterschnittene Rippe 31. Die Hinterschnitte der Rippen 30 und 31 begrenzen Rillen 30a und 31a, welche zur gleichen Seite offen sind. Zwischen den beiden hinterschnittenen Rippen 30 und 31 steckt in der zylindrischen Bohrung 25 die Schraube 26. Neben der Rippe 31, aber nicht zwischen den Rippen 30 und 31, befindet sich in dem Halter 24 eine parallel zu der Rippe 31 verlaufende flache Nut 33, welche beidseitig hinterschnitten ist und in welcher eine Feder 34 gefangen ist. Die Feder 34 ist brückenbogenartig ausgebildet. Sie hat einen brückenbogenartigen Abschnitt, welcher sich in zwei ebene Endabschnitte 35 fortsetzt. Die ebenen Endabschnitte 35 haben beidseitig Fortsätze 36, welche in die Hinterschnitte der flachen Nut 33 eingreifen. Bei der Feder 34 handelt es sich um eine Stahlfeder. Wird sie in ihrem bogenförmigen Abschnitt niedergedrückt, dann entfernen sich ihre beiden ebenen Enden 35 voneinander; sie können in der hinterschnittenen Nut 33 gleiten. Damit die Feder 34 nicht aus der Nut 33 herausgleiten und verloren gehen kann, ist der Rand der flachen Nut 33 an deren beiden Enden etwas eingedrückt. Die eingedrückten Stellen sind mit der Bezugszahl 37 bezeichnet und in Figur 5 beispielhaft zu sehen.

Das Profil der Quertraverse 23 ist besonders gut in Figur 4 zu sehen. Die Quertraverse 23 hat einen Steg 38, welcher zwei quer dazu verlaufende Wände 39 und 40 verbindet. Der Steg 38 endet außermittig an den Wänden 39 und 40. Die Wand 40 setzt sich in zwei Leisten 41 und 42 fort, welche in einer gemeinsamen Ebene liegen, welche rechtwinklig zum Steg 38 und annährend parallel zur Wand 39 verläuft. Die Leiste 41 ist dazu vorgesehen, in die Rille 30a einzugreifen. Die Leiste 42 ist dazu vorgesehen, in die Rille 31 a einzugreifen und mit ihrem von der Rille 31 a abgewandten Rand 43 am seitlichen Rand des bogenförmigen Abschnitts der Feder 34 anzuschlagen.

Um die Quertraverse 23 mit ihren Leisten 41 und 42 in die Rillen 30a bzw. 31 a einführen zu können, positioniert man die Quertraverse 23 mit ihren Leisten 41 und 42 vor den Rillen 30a und 31a. Die Leiste 42 liegt dann auf der Feder 34, welche zunächst verhindert, dass die Leisten 41 und 42 in die Rillen 30a und 31a geschoben werden. Erst wenn die Feder 34 mit der Quertraverse 23 niedergedrückt wird, kann man die Quertraverse 23 mit ihren Leisten 41 und 42 bis zum Anschlag in die Rillen 30a und 31a schieben. Dabei gleitet die Leiste 42 seitlich von der Feder 34 ab, so dass diese sich wieder aufwölbt und mit ihrem gewölbtem Abschnitt unmittelbar neben dem Rand 43 der Leiste 42 liegt und verhindert, dass die Quertraverse 23 mit ihren Leisten 41 und 42 wieder aus den Rillen 30a und 31 a herausgleitet.

Die mittels der Feder 34 im Halter 24 verriegelte Quertraverse 23 und ihr Eingriff in den Halter 24 sind in der Schnittdarstellung der Figur 4 gut zu erkennen. Sollte es erforderlich sein, irgendwann einmal die Quertraverse 23 wieder zu entfernen, muss man lediglich, z. B. mit einem Schraubenzieher, den Bogen der Feder 34 nach unten drücken, um die Quertraverse 23 zu entriegeln.

Ein plattenförmiges Solarmodul, insbesondere ein Fotovoltaikmodul, wird wie folgt zwischen zwei waagerechte Quertraversen 23 eingesetzt und von diesen gehalten, welche in der beschriebenen Weise mit Abstand voneinander an geneigten Traversen 3 befestigt sind: Mit seinem oberen Rand wird das Solarmodul von unten her gegen den Steg 38 der oberen Quertraverse 3 gehoben. Der untere Rand des Solarmoduls kann dann über den oberen Rand der weiter unten liegenden, benachbarten Quertraverse 23 gehoben und auf deren Steg 38 abgesenkt werden. Da die Wand 39, an welcher der Steg 38 endet, nach unten hin weiter über den Steg 38 vorsteht als nach oben, bleibt das Solarmodul unter seinem eigenen Gewicht zwischen den Stegen 39 der beiden benachbarten Quertraversen 23 gefangen. Genauso leicht, nämlich durch Anheben und Herausheben des Solarmoduls mit seinem unteren Rand über den oberen Rand der unteren Quertraverse 23 hinweg, kann das Solarmodul auch wieder entnommen werden.

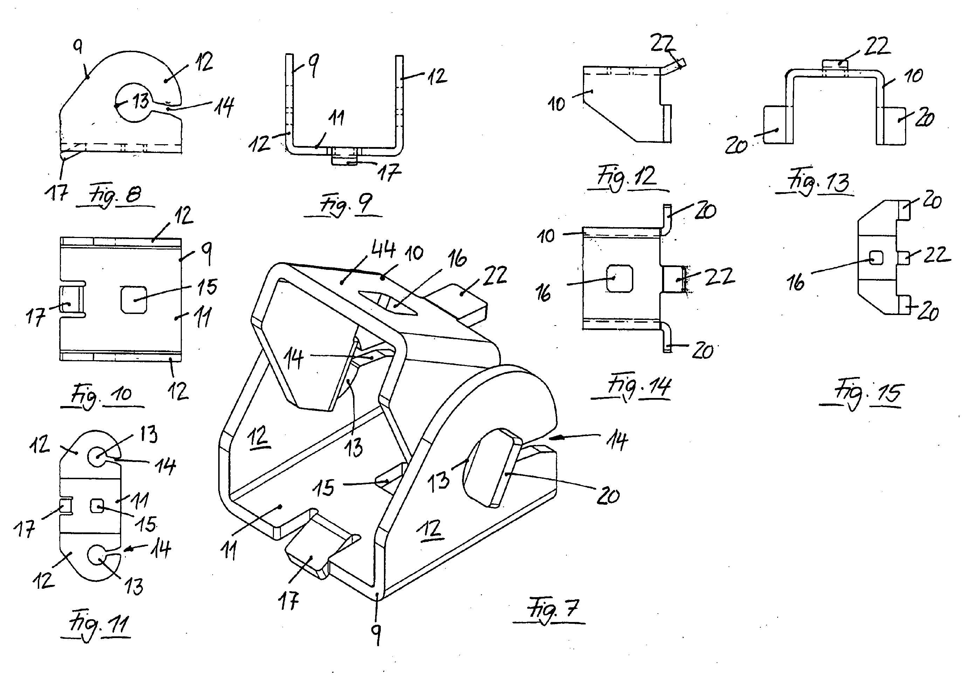

Die in den Figuren 7 bis 15 dargestellte Halterung 8 unterscheidet sich von der in Figur 2 dargestellten Halterung 8 nur darin, dass anstelle eines im Wesentlichen L-förmigen Oberteils 10 ein im Wesentlichen U-förmiges Oberteil 10 vorgesehen ist, dessen Mittelteil 44 mit einem quadratischen Loch 16 für die Verschraubung mit einer geneigten Traverse 3 vorgesehen ist. Die in den Figuren 7 bis 15 dargestellte Halterung hat gegenüber dem Ausführungsbeispiel in Figur 2 den Vorteil einer größeren mechanischen Stabilität und Steifigkeit. Beide Ausführungsformen der Halterung 8 lassen sich durch Stanzen und Biegen aus Stahlblech herstellen. Wie das Stanzteil vor dem Biegen aussieht, ist für das Unterteil 9 in Figur 11 und für das Oberteil 10 in Figur 15 dargestellt.

In entsprechender Weise wie die in den Figuren 7 bis 15 dargestellte Halterung 8 lässt sich auch die in Figur 2 dargestellte Halterung 8 durch Stanzen und Biegen aus einem Stahlblech herstellen.

Der erfindungsgemäße Bauteilesatz eignet sich nicht nur für Fassaden und Flachdächer, sondern auch für geneigte Dächer (Schrägdächer). In diesem Fall benötigt man keine Ständer, sondern kann die geneigten Traversen z. B. mit Bügeln, welche durch die Dacheindeckung hindurchgeführt werden, an Dachsparren befestigen.

### Bezugszahlen

- 1: Grundschiene, waagerechter Träger
- 2: Profilstab, Pfosten
- 3: geneigte Traverse
- 4: hinterschnittene Nut
- 4a: hinterschnittene Nut
- 4b: Hinterschnitte
- 5: Schraube
- 6: Mutter
- 7: Montagewinkel
- 8: Halterung
- 9: erstes Winkelstück (Unterteil)
- 10: zweites Winkelstück (Oberteil)
- 11: Basis
- 12: Seitenteile
- 13: Bohrung
- 14: Schlitz
- 15: Loch in 9
- 16: Loch in 10
- 17: Zunge
- 18: erster Schenkel
- 19: zweite Schenkel
- 20: Arme
- 21: Rand
- 22: Zunge
- 23: Quertraverse
- 24: Halter
- 25: zyl. Bohrung in 24
- 26: Schraube
- 27: Unterlegscheibe
- 28: Gewindebohrung in 29
- 29: Gegenhalter
- 30: hinterschnittene Rippe
- 30a: Rille
- 31: hinterschnittene Rippe
- 31a: Rille
- 32 33: hinterschnittene Nut
- 34: Feder
- 35: ebene Endabschnitte vom 34
- 36: seitliche Fortsätze von 35
- 37: eingedrückte Stellen an 38
- 38: Steg von 23
- 39: Wand von 23
- 40: Wand von 23
- 41: Leiste an 23
- 42: Leiste an 23
- 43: Rand der Leiste 42
- 44: Mittelteil

## Patentansprüche

1. Bauteilesatz,
welcher Quertraversen (23), die rechteckige Solarmodule tragen sollen und Halter (24) zum Anbringen der Quertraversen (23) an Traversen (3) enthält, welche auf einem Dach geneigt montiert sind und die Quertraversen (23) unter einem rechten Winkel kreuzen,
mit folgenden Merkmalen:
- Die Halter (24) haben als Grundkörper eine Platte, auf welcher zwei zueinander parallele Rippen (30, 31) vorgesehen sind;
- beide Rippen (30, 31) sind zur Bildung einer Rille (30a, 31a) hinterschnitten ausgebildet;
- die Hinterschnitte (4b) der beiden Rippen (30, 31) sind gleich orientiert;
- neben einer der Rippen (30, 31), aber nicht zwischen den Rippen (30, 31), ist in der Platte eine Nut (33) vorgesehen, welche parallel zu den Rippen (30, 31) verläuft;
- die Nut (33) ist beidseitig hinterschnitten ausgebildet;
- in die Nut (33) ist eine Feder (34) eingeschoben, welche durch die Hinterschnitte in der Nut (33) gehalten ist und über die äußeren Ränder der Nut (33) vorsteht;
- der Halter (24) hat Mittel (25) zum Verbinden des Halters (24) mit einer Traverse (3);
- die Quertraversen (23) haben einen Steg (38) welcher zwei sich rechtwinklig zum Steg (38) erstreckende Wände (39, 40) verbindet;
- eine erste der beiden Wände (39, 40) trägt auf ihrer der anderen, zweiten Wand (40) abgewandten Seite zwei zu der ersten Wand (39) parallele Leisten (41, 42), welche unter die beiden hinterschnittenen Rippen (30 31) des Halters (24) passen;
- die Profilform und die Abmessungen der Quertraverse (23) und des Halters (24) sind so aufeinander abgestimmt, dass die beiden Leisten (41, 42) nur unter Niederdrücken der Feder (34) in den Hinterschnitt der Rippen (4b) eingeführt werden können, wonach sich die Feder (34) wieder aufrichtet und die Quertraverse (23) in dem Halter (24) verriegelt;
**gekennzeichnet durch** folgende Merkmale;
- die Feder (34) hat einen Abschnitt mit der Gestalt eines Brückenbogens, welcher über die äußeren Ränder der Nut (33) vorsteht;
- an den brückenbogenförmigen Abschnitt der Feder (34) schließen sich zwei breitere, ebene Endabschnitte (35) der Feder (34) an, mit welchen die Feder (34) in der hinterschnittenen Nut (33) gehalten ist;
- die Endabschnitte (35) der Feder (34) haben Spielraum, um in der Nut (33) in deren Längsrichtung zu gleiten, wenn der brückenbogenförmige Abschnitt der Feder (34) niedergedrückt wird.

2. Bauteilesatz nach Anspruch 1, **dadurch gekennzeichnet, dass** die Hinterschnitte der Nut (33) an deren Enden verengt sind, vorzugsweise durch Prägen.

3. Bauteilesatz nach Anspruch 1 oder 2, **dadurch gekennzeichnet, dass** die Hinterschnitte der Rippen (30, 31) des Halters (24) so orientiert sind, dass sie in Richtung zur Feder (34) offen sind.

4. Bauteilesatz nach einem der vorstehenden Ansprüche, **dadurch gekennzeichnet, dass** die Hinterschnitte der Rippen (30, 31) Rillen (30a, 31a) sind, welche seitlich offen in den Rippen (30, 31) vorgesehen sind.

5. Bauteilesatz nach einem der vorstehenden Ansprüche, **dadurch gekennzeichnet, dass** die Mittel (25) zum Verbinden des Halters (24) mit einer geneigten Traverse (3) eine mittige zylindrische Bohrung (25) in der Platte des Halters (24) aufweisen.

6. Bauteilesatz nach einem der vorstehenden Ansprüche, **dadurch gekennzeichnet, dass** aus dem Boden der Nut (33) zwei Zungen ausgeschnitten und nach unten abgebogen sind, um in eine Nut (4a) in der Oberseite der geneigten Traverse (3) einzugreifen.

7. Bauteilesatz nach einem der vorstehenden Ansprüche, **dadurch gekennzeichnet, dass** der Halter (24) und/oder die Quertraverse (23) Strangpressprofile sind.

## Claims

1. A component set,
which contains crossmembers (23), which are intended to support rectangular solar modules, and holders (24) for attaching the crossmembers (23) on traverses (3), which are mounted at a slant on a roof and cross the crossmembers (23) at a right angle,
having the following features:
- The holders (24) have a plate as the base body, on which two parallel ribs (30, 31) are provided;
- both ribs (30, 31) are provided with undercuts in order to form a channel (30a, 31 a);
- the undercuts (4b) of the two ribs (30, 31) are identically oriented;
- a groove (33) is provided in the plate, next to one of the ribs (30, 31), but not between the ribs (30, 31), said groove (33) extending parallel to the ribs (30, 31);
- the groove (33) is designed to be undercut on both sides;
- a spring (34) is inserted into the groove (33), which is held in the groove (33) by the undercuts and protrudes beyond the outer edges of the groove (33);
- the holder (24) has means (25) for connecting the holder (24) to a traverse (3);
- the crossmembers (23) have a web (38), which connects two walls (39, 40) extending at a right angle to the web (38);
- a first one of the two walls (39, 40) carries two strips (41, 42), which are parallel to the first wall (39), on the side of said first wall that faces away from the other, second wall (40), said strips fitting underneath the two undercut ribs (30, 31) of the holder (24);
- the profiled shape and the dimensions of the crossmember (23) and the holder (24) are matched to one another such that the spring (34) must be pressed down into the undercut of the ribs (4b) in order to insert the two strips (41, 42), after which the spring (34) expands again and locks the crossmember (23) in the holder (24);
**characterized by** the following features:
- the spring (34) has a section having the shape of a bridge arch, which protrudes beyond the outer edges of the groove (33);
- the bridge arch-shaped section of the spring (34) extends into two wider, flat end sections (35) of the spring (34), by means of which the spring (34)is held in the undercut groove (33);
- the end sections (35) of the spring (34) have play, in order to glide in the groove (33) in the longitudinal direction thereof when the bridge arch-shaped section of the spring (34) is pressed down,

2. The component set according to claim 1, **characterized in that** the undercuts of the groove (33) are narrowed at the ends thereof, preferably by stamping.

3. The component set according to claim 1 or 2, **characterized in that** the undercuts of the ribs (30, 31) of the holder (24) are oriented such that said undercuts are open in the direction toward the spring (34).

4. The component set according to any one of the preceding claims, **characterized in that** the undercuts of the ribs (30, 31) are channels (30a, 31 a), which are provided in the ribs (30, 31) so as to be open on the sides.

5. The component set according to any one of the preceding claims, **characterized in that** the means (25) for connecting the holder (24) to a slanted traverse (3) have a cylindrical bore (25) in the plate of the holder (24).

6. The component set according to any one of the preceding claims, **characterized in that** two tongues are cut out of the base of the groove (33) and are bent downward in order to engage into a groove (4a) in the top side of the slanted traverse (3).

7. The component set according to any one of the preceding claims, **characterized in that** the holder (24) and/or the crossmember (23) are extruded parts.

## Revendications

1. Ensemble de composants,
lequel contient des traverses transversales (23), qui doivent porter des modules solaires rectangulaires et des supports (24) pour monter les traverses transversales (23) sur des traverses (3), lesquelles sont montées inclinées sur un toit et se croisent avec les traverses transversales (23) en faisant un angle droit,
avec les caractéristiques suivantes :
- les supports (24) ont une plaque servant de corps de base, sur laquelle deux rainures (30, 31) parallèles l'une à l'autre sont prévues ;
- les deux rainures (30, 31) sont conçues avec une dépouille pour la formation d'une nervure (30a, 31a) ;
- les dépouilles (4b) des deux rainures (30, 31) sont orientées dans le même sens ;
- une entaille (33), laquelle s'étend parallèlement par rapport aux rainures, est prévue dans la plaque à côté de l'une des rainures (30, 31), mais pas entre les rainures (30, 31) ;
- l'entaille (33) est conçue avec une dépouille des deux côtés ;
- un ressort (34) est inséré dans l'entaille (33), lequel est maintenu dans l'entaille (33) par les dépouilles et dépasse par les bords extérieurs de l'entaille (33) ;
- le support (24) possède des moyens (25) pour la liaison du support (24) avec une traverse (3) ;
- les traverses transversales (23) ont une patte (38), laquelle relie deux parois (39, 40) s'étendant en faisant des angles droits par rapport à la patte (38) ;
- une première parmi les deux parois (39, 40) porte deux profilés (41, 42) parallèles à la première paroi (39) sur la face opposée de l'autre seconde paroi, lesquels sont ajustés pour se glisser en dessous des deux rainures (30, 31) dotées d'une dépouille du support (24) ;
- la forme du profilé et les dimensions de la traverse transversale (23) et du support (24) sont ajustées les unes aux autres de telle manière que les deux profilés (41, 42) ne peuvent être insérés dans la dépouille des rainures (4b) uniquement par une compression du ressort (34) vers le bas, après quoi, le ressort (34) se déploie de nouveau et verrouille la traverse transversale (23) dans le support (24) ;
**caractérisé par** les caractéristiques suivantes :
- le ressort (34) possède une partie ayant la forme d'une arche, laquelle dépasse par-dessus les bords extérieurs de l'entaille (33) ;
- deux parties d'extrémités (35) du ressort (34) plus larges et planes succèdent à la partie du ressort (34) en forme d'arche, par lesquelles le ressort (34) est maintenu dans l'entaille (33) dotée d'une dépouille ;
- les parties d'extrémités (35) du ressort (34) ont du jeu afin de glisser dans l'entaille (33) dans leur direction longitudinale lorsque la partie du ressort (34) en forme d'arche est pressée vers le bas.

2. Ensemble de composants selon la revendication 1, **caractérisé en ce que** la dépouille de l'entaille (33) est rétrécie au niveau de ses extrémités, de préférence par un forgeage.

3. Ensemble de composants selon les revendications 1 ou 2, **caractérisé en ce que** les dépouilles des rainures (30, 31) du support (24) sont orientées de telle façon qu'elles sont ouvertes en direction du ressort (34).

4. Ensemble de composants selon l'une des revendications précédentes, **caractérisé en ce que** les dépouilles des rainures (30, 31) sont des nervures (30a, 31 a), lesquelles sont prévues ouvertes latéralement dans les rainures (30, 31).

5. Ensemble de composants selon l'une des revendications précédentes, **caractérisé en ce que** les moyens (25) présentent un alésage (25) cylindrique central dans la plaque du support (24) pour la liaison du support (24) avec une traverse (3) inclinée.

6. Ensemble de composants selon l'une des revendications précédentes, **caractérisé en ce que** deux languettes sont découpées dans le fond de l'entaille (33) et sont recourbées vers le bas afin d'être en prise dans une rainure (4a) sur la face supérieure de la traverse (3) inclinée.

7. Ensemble de composants selon l'une des revendications précédentes, **caractérisé en ce que** le support (24) et/ou la traverse transversale (23) sont des profilés extrudés.
